# EUROPEAN PATENT SPECIFICATION

(11) **EP 2 108 624 B1**
(45) Date of publication and mention of the grant of the patent: **19.10.2016**
(21) Application number: 09000428.4
(22) Date of filing: 14.01.2009
(51) Int. Cl.: C03C 3/06, C03C 4/12, C03C 13/04, H01S 3/17, C03B 37/018, H01S 3/067

(54) **Rare-earth-doped optical fiber, optical fiber amplifier, and method of manufacturing a preform for such a fiber**
Mit Seltenerdmetallen dotierte Glasfaser, Glasfaserverstärker und Verfahren zur Herstellung eines Vorformlings für eine solche Faser
Fibre optique dopée par des terres rares, amplificateur à fibre optique et procédé de fabrication de cette fibre

(30) Priority: 15.01.2008 JP 2008006074
(43) Date of publication of application: 14.10.2009
(73) Proprietor: Sumitomo Electric Industries, Ltd., Osaka-shi, Osaka 541-0041 (JP)
(72) Inventor: Haruna, Tetsuya,, Yokohama-shi, Kanagawa (JP); Ishikawa, Manabu,, Yokohama-shi, Kanagawa (JP)
(74) Representative: Hoffmann Eitle

(56) References cited:
- EP-A- 1 043 281
- WO-A-02/060830
- GB-A- 2 303 129
- JP-A- 2005 041 702
- US-A- 4 616 901
- US-A- 5 005 175
- AINSLIE B J ET AL: "ERBIUM DOPED FIBRES FOR EFFICIENT OPTICAL AMPLIFIERS" IEE PROCEEDINGS J. OPTOELECTRONICS, INSTITUTION OF ELECTRICAL ENGINEERS. STEVENAGE, GB, vol. 137, no. 4, 1 August 1990 (1990-08-01), pages 205-208, XP000148977 ISSN: 0267-3932
- AINSLIE B J: "A REVIEW OF THE FABRICATION AND PROPERTIES OF ERBIUM-DOPED FIBERS FOR OPTICAL AMPLIFIERS" JOURNAL OF LIGHTWAVE TECHNOLOGY, IEEE SERVICE CENTER, NEW YORK, NY, US, vol. 9, no. 2, 1 February 1991 (1991-02-01), pages 220-227, XP000225312 ISSN: 0733-8724
- URQUHART P: "REVIEW OF RARE EARTH DOPED FIBRE LASERS AND AMPLIFIERS" IEE PROCEEDINGS J. OPTOELECTRONICS, INSTITUTION OF ELECTRICAL ENGINEERS. STEVENAGE, GB, vol. 134, no. 6, PART J, 1 December 1988 (1988-12-01), pages 385-407, XP000070953 ISSN: 0267-3932
- DIGIOVANNI D J ET AL: "THE EFFECT OF SINTERING ON DOPANT INCORPORATION IN MODIFIED CHEMICAL VAPOR DEPOSITION" JOURNAL OF LIGHTWAVE TECHNOLOGY, IEEE SERVICE CENTER, NEW YORK, NY, US, vol. 7, no. 12, 1 December 1989 (1989-12-01), pages 1967-1972, XP000103655 ISSN: 0733-8724

## Description

### BACKGROUND OF THE INVENTION

### Field of the Invention

The present invention relates to an optical fiber having a core region in which a rare-earth element is doped, an optical fiber amplifier which performs optical amplification using such an optical fiber, and a method of producing a preform that is suitable for making such an optical fiber.

### Description of the Background Art

A rare-earth-doped optical fiber is an optical fiber having a core region in which a rare-earth element (e.g., erbium) is doped, and it is used as a medium for optical amplification in an optical fiber amplifier. The rare-earth-doped optical fiber is manufactured, in a similar manner as an optical fiber for transmission, by drawing a preform while heating it sequentially from its one end toward the other end.

One method for manufacturing a preform is a modified chemical vapor deposition method (MCVD method). In the MCVD method, first a glass particle deposited layer is formed by introducing a raw material gas inside a silica glass pipe and heating the silica glass pipe and by depositing the fine glass particles formed from the raw material gas on the inner wall of the silica glass pipe. Next, the glass particle deposited layer is further heated under an atmosphere of halogen gas such as chlorine gas so that it may be processed to a consolidated glass layer by dehydrating and consolidating it. Methods of manufacturing a preform for a rare-earth-doped optical fiber by the MCVD method are disclosed in Japanese Patent Application Publication Nos. H5-330842 (Document 1), H6-298542 (Document 2), H7-069666 (Document 3), H9-025135 (Document 4). In these preform manufacturing methods, the deposition process and the dehydration process are separately performed.

In the preform manufacturing methods disclosed in Documents 1 to 3, an impregnation process for impregnating glass-particle-deposited layers with a solution that contains a chloride of rare-earth element is provided between the deposition process and the dehydration process. In the preform manufactured in this way, the part produced by deposition, impregnation, dehydration, and consolidation according to the MCVD method becomes a core region, and the silica glass pipe becomes a cladding region. In such method, in order to adjust the impregnation quantity in the impregnation process, the thickness of glass (i.e., glass-particle-deposited layers) is limited to a certain thickness; therefore, the size of a preform that can be manufactured is limited accordingly, which results in extremely low productivity.

On the other hand, in the preform manufacturing method disclosed in Document 4, first, a glass particle deposited layer that includes a rare-earth element is formed on the inner wall of a silica glass pipe by supplying the rare-earth element in a gaseous state; next, under an atmosphere of halogen gas such as chlorine gas, the glass particle deposited layer is processed into a consolidated glass layer by dehydration and sintering by means of heating. This method is rather good in terms of productivity but has a shortcoming in that if a preform made by the method is doped with high concentration of phosphorus in the core region, the optical fiber made therefrom suffers from increase in the attenuation. The heating temperature for consolidating a glass layer doped with phosphorus is 1100 to 1200°C with respect to the surface temperature of the silica glass pipe, and for both the deposition process and the dehydration process, the heating temperature must be lower than the heating temperature for the above-mentioned consolidating process. Therefore, in the deposition process, the oxidation reaction of the organic raw material gas that includes a rare-earth element does not sufficiently progress and accordingly the rare-earth element will not be incorporated into the glass particle deposited layer. Also, the dehydration and the removal of impurities will not sufficiently be achieved.

GB-A-2 303 129 discloses a method of fabricating an optical fiber doped with a rare earth component using a volatile complex, which flattens the light frequency response under a stimulated emission of radiation principle using a modified chemical vapor deposition method. Silicon tetrachloride (SiCl₄) and oxygen are injected into a quartz reaction tube under a heating process, so that a cladding layer is repeatedly deposited. Then, a volatile organic metal chelate, silicon tetrachloride and oxygen are injected into the quartz reaction tube, and heated and water-cooled to form a porous layer. At the same time, a rare earth element is deposited on the porous layer, to thereby form a core layer. Thereafter, via a high heating process, a preform is completed. Then, an optical fiber is obtained from the preform via a drawing-out process.; Here, hydroxide ions (OH⁻) which occur as the organic ligand is volatilized and cause an optical loss of the optical fiber and removed as the porous layer is formed by the water-cooling, and an added rare earth content is easily controlled, so that the rare earth with high concentration is evenly distributed. Also, since the core layer adopts SiO₂ and Al₂O₃ as a host material instead of GeO₂, the difference in a refractive index between the cladding and core layers becomes greater then 0.015, to thereby provide the optical fiber with excellent optical characteristics.

US 4,616,901 discloses optical fibers doped with nonglass forming refractory oxides, such as alumina and zirconia. Devitrification is retarded by adding an additional glass forming component, such as P₂O₅, and by rapidly quenching the heated glass. Aluminum and zirconium-containing precursor vapors are formed by passing halide gas over heated aluminum or zirconium wire.

WO-A-02/060830 discloses a process for making rare earth doped preforms and fibres by a combination of MCVD technique and solution doping method, said method comprising developing matched or depressed clad structure inside a silica glass substrate tube followed by deposition of unsintered particulate layer containing GeO₂ and P₂O₅ for formation of the core and solution doping by soaking the porous soot layer into an alcoholic/aqueous solution of RE-salts containing co-dopants like AlCl₃ / Al(NO₃)₃ in definite proportion, controlling the porosity of the soot, dipping period, strength of the solution and the proportion of the codopants to achieve the desired RE ion concentration in the core and minimise the core clad boundary defects and followed by drying, oxidation,; dehydration and sintering of the RE containing porous deposit and collapsing at a high temperature to produce the preform and overladding with silica tubes of suitable dimensions and fibre drawing to produce fibres.

EP-A-1 043 281 discloses a method of fabricating rare earth-doped preforms for optical fibers. A silica soot is deposited as a layer with high porosity on an inner surface of a silica-based tube by a modified chemical vapor deposition (MCVD) process at a temperature high enough to produce the silica soot but low enough to avoid sintering of the soot into the silica-based tube. The silica-based tube is then immersed in a solution including a rare earth element and optionally a codopant element for impregnation. The excess solution is drained and the silica-based tube is dried in a stream of chlorine and inert gas at an elevated temperature. Then, the rare earth element and the optional codopant element are oxidized under an oxygen partial pressure at a temperature high enough to overcome kinetic limitations against oxidation. Finally, the soot layer is consolidated while flowing oxygen and optionally a mixture of chlorides of a second codopant element at a sintering temperature at which the second codopant element reacts with oxygen to form codopant oxide which is delivered around the rare earth element oxide deposited in the soot layer. In the method of the current invention, one or more rare earth elements are codoped with preferred codopants including but not limited to Ge, Al, P and/or B to enhance the performance of the rare earth ions. Other dopants may also be used in conjunction with the preferred dopants for modifying the refractive index of the core.

US 5,005,175 discloses a rare earth doped optical amplifier with increased gain and lowered pump thresholds. The amplifying scheme is based on a 3 level lasing system rather than the more prevalent 4 level lasing system. Additionally, the transmission mode of the optical fiber at the pump wavelength has a radius which is substantially equal to or greater than the radius of the distribution profile of the rare earth ions in the fiber amplifier core. With the inventive amplifier, a gain of 37 dB and a saturation power of 11.3 dBm has been obtained with only 54 mW of launch power at λ = 1.49 µm.

JP 2005-041702 discloses a method for producing an optical fiber glass preform, which method is for forming a glass layer inside a quartz pipe and comprises using a raw material containing an organometallic compound to lower the OH group content. An optical fiber glass preform produced by this method has a core having has a low OH group content and containing Cl. The low OH group content Cl-containing optical fiber glass preform is obtained by introducing a glass stock gas (including an additive stock gas) and at least one organometallic compound gas into a quartz pipe and subjecting them to an oxidation reaction within the pipe to deposit one or more glass microparticle layers. The layers are transparentized after dehydration. Collapsing is performed after performing the deposition-dehydration-transparentization one or more times. The dehydration process intervenes between the deposition and the transparentization to avoid transparentization immediately after deposition.

### SUMMARY OF THE INVENTION

The object of the present invention is to provide a method of producing a preform for efficiently making a low-loss optical fiber that is doped with phosphorus and a rare-earth element, and to provide an optical fiber made from the preform prepared by the method, as well as an optical fiber amplifier capable of optical amplification in a broad bandwidth by using the optical fiber.

According to the present invention, there is provided a method of producing an optical fiber preform as set out in each of Claims 1 and 2.

The present invention also provides an erbium-doped optical fiber as set out in Claim 3.

The present invention also provides an optical amplifier as set out in Claim 5.

### BRIEF DESCRIPTION OF THE DRAWINGS

These and other features, aspects, and advantages of the present invention will be better understood through the following description, appended claims, and accompanying drawings. In the explanation of the drawings, an identical mark is applied to identical elements and an overlapping explanation will be omitted.
Figure 1 is a schematic diagram illustrating the MCVD method.
Figure 2 shows the steps of preform manufacturing methods in Examples and Comparative examples.
Figure 3 shows conditions in the respective steps of preform manufacturing methods in Examples and Comparative examples.
Figure 4 is a graph showing the relationship between Cl-doping concentration and attenuation in 1200 nm wavelength band.
Figure 5 is a graph showing the relationship between the thickness of P-doped glass layer and Cl-doping concentration at P step.
Figure 6 is a graph showing the relationship between the heating temperature and Cl-doping concentration at Cl₂ treatment step.
Figure 7 is a graph showing the relationship between the Cl-doping concentration and the ratio of the Cl₂ gas flow rate to the flow rate of the total gas introduced into the silica glass pipe at the Cl₂ treatment step.
Figure 8 is a schematic diagram of an optical fiber amplifier relating to the present embodiment.

### DETAILED DESCRIPTION OF EMBODIMENTS

The following describes a preform manufacturing method, in which a first step and a second step are alternately repeated: the first step is such that P₂O₅-containing glass is deposited on the inside of a silica glass pipe; and the second step is such that Cl₂-containing gas is introduced inside the silica glass pipe and the P₂O₅-containing glass is dehydrated by heating the silica glass pipe. In this case, in the first step, the P₂O₅-containing glass is deposited on the inner wall of the silica glass while a heat source traverses a plurality of times along the silica glass pipe. Also, in the second step, while the heat source traverses a plurality of times along the silica glass pipe, the Cl₂-containing gas is introduced inside the silica glass pipe and the dehydration is done. Also, a third step may be provided such that while the heat source traverses one or plurality of times along the silica glass pipe, glass which does not include P₂O₅ is deposited on the inside of the silica glass pipe, and the first step, the second step, and the third step may be repeatedly performed in this order.

In addition, the following describes a rare-earth-doped optical fiber which has a attenuation of 15 dB/km or less at a wavelength of 1200 nm and which comprises a core region and a cladding region enclosing the core region, where the core region includes phosphorus of 3 wt% or more, aluminum of 0.3 wt% or more, rare-earth of 500 wtppm or more, and chlorine of 0.03 wt% or more, and the cladding region has a refractive index that is lower than the refractive index of the core region.

Moreover, the following describes an optical fiber amplifier comprising a rare-earth-doped optical fiber of the present invention, a pump light source for outputting pump light with a wavelength capable of exciting the rare-earth element that is added to the core region of the rare-earth-doped optical fiber, and a multiplexer/demultiplexer for supplying the pump light, which is output from the pump light source, to the rare-earth-doped optical fiber.

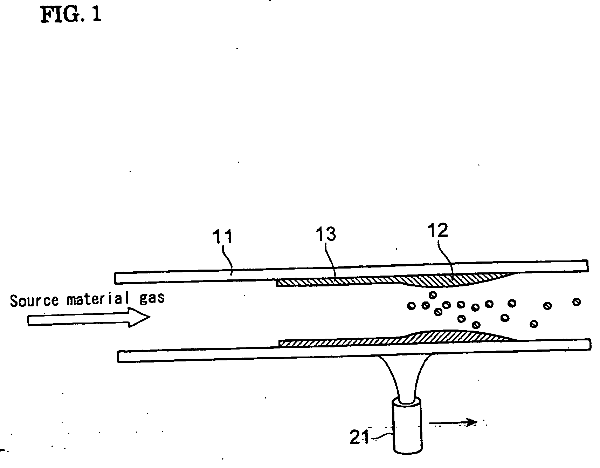

Figure 1 is a schematic diagram illustrating the MCVD method. In the MCVD method, a silica glass pipe 11 is heated with a burner 21 by traversing the burner 21 from the one end to the other end of the of silica glass pipe 11 while a raw material gas is introduced inside the silica glass pipe 11 from the one end. The silica glass pipe 11 may be doped with fluorine. Fine glass particles are generated from the raw material gas by heating, and the fine glass particles are deposited on the inner wall of the silica glass pipe 11 so as to make a glass particle deposited layer 12. The glass particle deposited layer 12 is further heated by the traverse of the burner 21 so as to be dehydrated and sintered to become a consolidated glass layer 13. The raw material gas introduced inside the silica glass pipe 11 includes, for example, any of SiCl₄ gas, Er(C₁₁H₁₉O₂)₃ gas, AlCl₃ gas, POCl₃ gas, He gas, O₂ gas, and Cl₂ gas as needed.

Hereinafter, Examples of preform manufacturing methods according to embodiments of the present invention will be described, along with Comparative examples not forming embodiments of the invention. In Examples and Comparative examples, preforms are prepared by using some of the following steps in combination: "P step" of depositing P₂O₅-containing SiO₂ fine glass particles on
the inner wall of a silica glass pipe 11 (the first step); "Cl₂ treatment step" of introducing a Cl₂-containing gas into the silica glass pipe and heating the silica glass pipe to dehydrate the P₂O₅-containing glass (the second step); "EAP step" of depositing SiO₂ fine glass particles, which contain erbium, Al₂O₃ and P₂O₅, on the inner wall of the silica glass pipe 11; and "EA step" of depositing SiO₂ fine glass particles, which contain erbium and Al₂O₃, on the inner wall of the silica glass pipe 11 (the third step: glass which does not include P₂O₅ is deposited on the inner wall of the silica glass pipe).

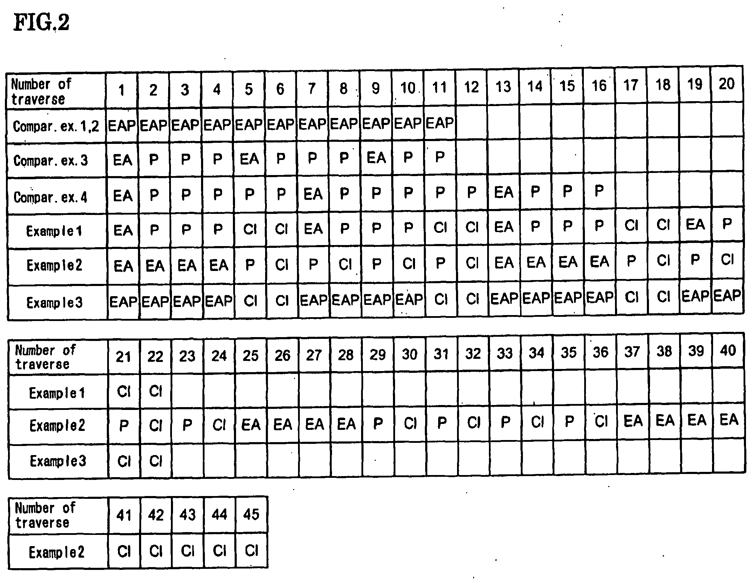

Figure 2 shows the steps of preform manufacturing methods in Examples and Comparative examples. In Comparative examples 1 and 2, the traverses of the burner 21 from the first to 11th are all EAP steps. In Comparative example 3, the first, fifth, and ninth traverses of the burner 21 are respectively EA steps, and the 2nd to 4th, 6th to 8th, 10th, and 11th traverses are respectively P steps. In Comparative example 4, the 1st, 7th, and 13th traverses are EA steps, and the 2nd to 6th, 8th to 12th, and 14th to 16th traverses are respectively P steps.

In Example 1, the 1st, 7th, 13th, and 19th traverses are respectively EA steps, the 2nd to 4th, 8th to 10th, 14th to 16th and 20th traverses are respectively P steps, and the 5th, 6th, 11th, 12th, 17th, 18th, 21st, and 22nd traverses are respectively Cl₂ treatment steps. In Example 2, the 1st to 4th, 13th to 16th, 25th to 28th, and 37th to 40th traverses are respectively EA steps; the 5th, 7th, 9th, 11th, 17th, 19th, 21st, 23rd, 29th, 31st, 33rd, and 35th traverses are respectively P steps; and the 6th, 8th, 10th, 12th, 18th, 20th, 22nd, 24th, 30th, 34th, 36th, and 41 st to 45th traverses are respectively Cl₂ treatment steps. In Example 3, the 1st to 4th, 7th to 10th, 13th to 16th, 19th, and 20th traverses are respectively EAP steps; and the 5th, 6th, 11th, 12th, 17th, 18th, 21st, and 22nd traverses are respectively Cl₂ treatment steps.

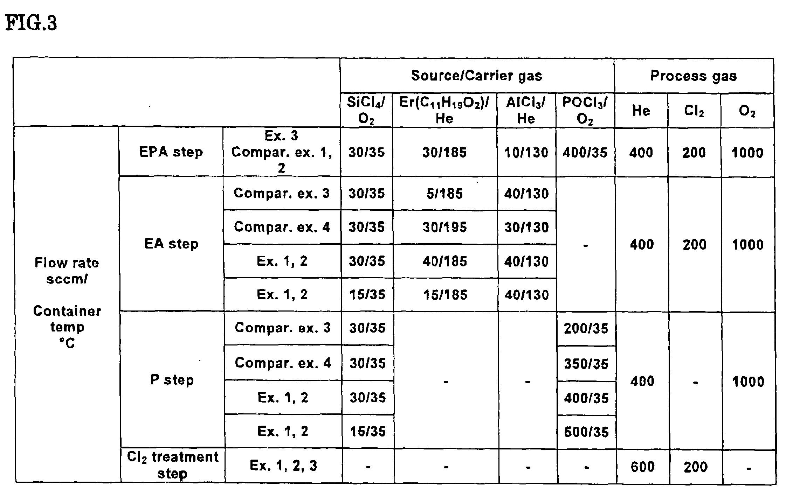

Figure 3 shows conditions in the respective steps of preform manufacturing methods in Examples and Comparative examples. In the respective steps of Examples 1 to 3 and Comparative examples 1 to 4, an oxyhydrogen burner was used as the burner 21 and the moving speed of the burner 21 was set to 120 mm/min. The heating temperature of the silica glass pipe 11 by the burner 21 at the EAP step was 1500 °C in Comparative example 1, 1200 °C in Comparative example 2, and 1200 °C in Example 3. The heating temperature of the silica glass pipe 11 by the burner 21 was 1850 °C at the EA steps, 1100 °C at the P steps, and 1800 °C at the Cl₂ treatment steps, respectively.

The following Table shows the concentrations of phosphorus, aluminum, erbium, and chlorine of the core region, and the attenuation at the 1200 nm wavelength band with respect to the of preforms prepared by the preform manufacturing methods in the Examples and Comparative examples, respectively.

| | Concentration | | | | Attenuation |
|---|---|---|---|---|---|
| | P(wt%) | Al(wt%) | Er(wtppm) | Cl(wt%) | dB/km |
| Comparative example 1 | 4.5 | 1.0 | 30 | 0.012 | 500 |
| Comparative example 2 | 4.3 | 1.1 | 100 | 0.012 | 500 |
| Comparative example 3 | 3.0 | 0.9 | 500 | 0.012 | 500 |
| Comparative example 4 | 5.8 | 0.9 | 2000 | 0.012 | 500 |
| Example 1 | 4.8 | 0.6 | 700 | 0.025 | 40 |
| Example 2 | 4.5 | 1.1 | 1400 | 0.032 | 8.1 |
| Example 3 | 4.2 | 1.1 | 80 | 0.024 | 50 |

In Examples 1 to 3, in which the Cl₂ treatment step is inserted, the attenuation in the 1200 nm wavelength band is reduced as compared with Comparative examples 1 to 4. Thus, according to the present invention, the preform for making a low-loss optical fiber doped with a rare earth and phosphorus can efficiently be manufactured. In addition, in Examples 1 and 2, each step can be processed at high temperature, allowing the stabilization of the heat source and hence the fluctuation in the dopant concentration and the deposition rate can be restrained, which enables easy manufacture of a preform that is uniform in the longitudinal direction.

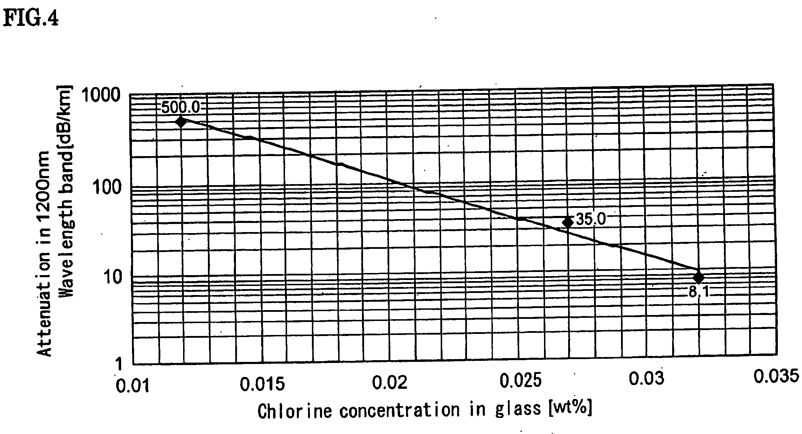

Figure 4 is a graph showing the relationship between Cl-doping concentration and attenuation in the 1200 nm wavelength band. The higher the Cl-doping concentration, the lower the attenuation of the optical fiber in the 1200 nm wavelength band. From the viewpoint of practical use, the attenuation of the optical fiber is preferably 20 dB/km or less in the 1200 nm wavelength band. Therefore, as can be seen from Fig. 4, it is necessary that the Cl concentration be equal to or more than 0.03 wt%.

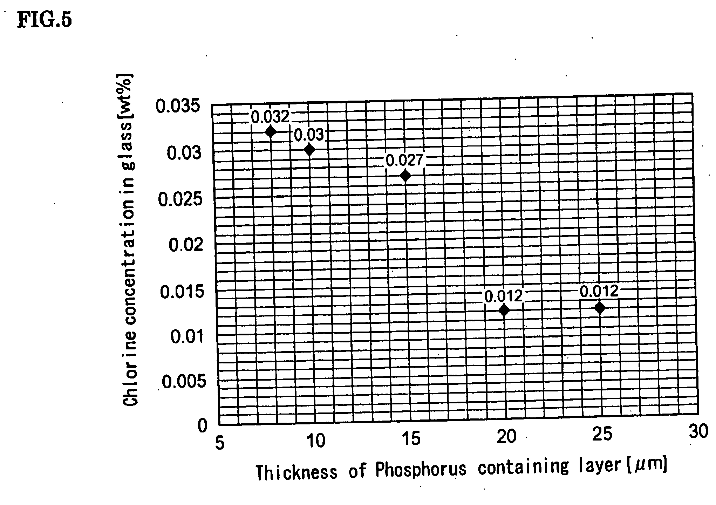

Figure 5 is a graph showing the relationship between the thickness of P-doped glass layer and Cl-doping concentration at P step. The thicker the thickness of the P-doped glass layer at the P step, the lower the doping concentration of chlorine that can be added to the P-doped glass layer. In order to make the Cl-doping concentration equal to or more than 0.03 wt%, it is necessary that the film thickness of P₂O₅-containing glass deposited on the inner wall of the silica glass pipe at P step be 10 µm or less.

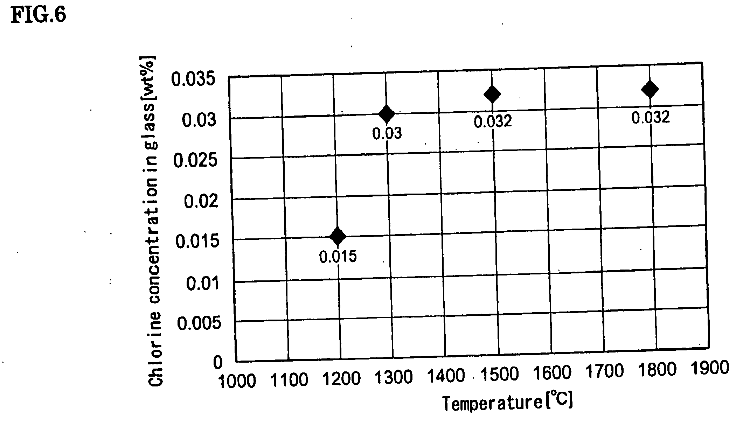

Figure 6 is a graph showing the relationship between the heating temperature and Cl-doping concentration at Cl₂ treatment step. In such Cl₂ treatment step, the film thickness of the P-doped glass layer is 10 µm, the Cl-gas flow rate is 200 cc/min, the flow rate of He gas is 600 cc/min, and the ratio of the flow rate of Cl₂ gas to the total gas flow rate is 0.25. The higher the heating temperature at the Cl₂ treatment step, the higher the Cl-doping concentration. To make the Cl-doping concentration equal to or more than 0.03 wt%, it is necessary to heat the silica glass pipe to 1300°C or more at the Cl₂ treatment step.

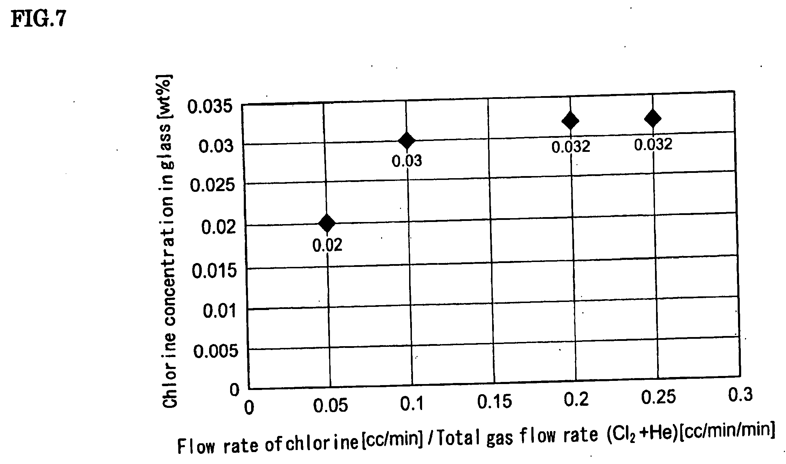

Figure 7 is a graph showing the relationship between the Cl-doping concentration and the ratio of the Cl₂ gas flow rate to the flow rate of the total gas introduced into the silica glass pipe at the Cl₂ treatment step. In such Cl₂ treatment step, the heating temperature is 1800°C and the film thickness of the P-doped glass layer is 10 µm. The larger the ratio of the Cl₂ gas flow rate
to the total gas flow rate, the higher the Cl-doping concentration. To achieve a Cl-doping concentration of 0.03 wt% or more, the flow rate of the Cl2 gas introduced into the silica glass pipe in the second step must be equal to or more than 1/10 of the total gas flow rate.

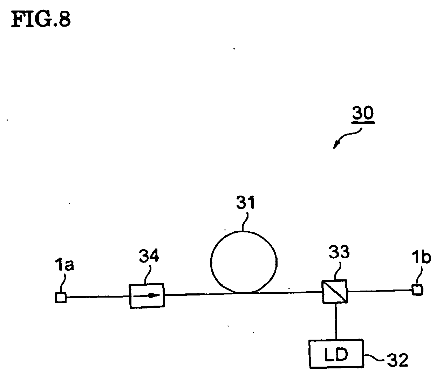

Figure 8 is a schematic diagram of an optical fiber amplifier 30 relating to the present embodiment. The optical fiber amplifier 30 shown in Fig. 8 comprises a rare-earth-doped optical fiber 31, a pump light source 32, a multiplexer/demultiplexer 33, and an optical isolator 34.

The rare-earth-doped optical fiber 31 has a core region and a cladding region. The core region has a P concentration of 3 wt% or more, Al concentration of 0.3 wt% or more, rare-earth concentration of 500 wtppm or more, and Cl concentration of 0.03 wt% or more. The cladding region, which surrounds the core region, has refractive index that is lower than the refractive index of the core region. The attenuation of the rare-earth-doped optical fiber 31 at the 1200 nm wavelength is 15 dB/km or less. The rare-earth-doped optical fiber 31 can be obtained by drawing a preform manufactured by the above-mentioned preform manufacturing method. The rare-earth element added to the core region is erbium, and the cladding region is preferably doped with fluorine. Preferably, the rare-earth-doped optical fiber 31 is such that gain is obtained in a wavelength range including a wavelength range of 1565 nm to 1625 nm.

The pump light source 32 outputs pump light having a wavelength capable of exciting the rare-earth element added to the core region of the rare-earth-doped optical fiber 31. The multiplexer/demultiplexer 33 supplies the pump light output from the pump light source 32 to the rare-earth-doped optical fiber 31, and also inputs the signal light output from the rare-earth-doped optical fiber 31 so as to output it from the emitting end 1b. The optical isolator 34, which is provided between the incident end 1a and the rare-earth-doped optical fiber 31, allows light to pass in the forward direction, and does not allow the light to pass in the opposite direction.

In the optical fiber amplifier 31, the pump light output from the pump light source 32 is supplied to the rare-earth-doped optical fiber 31 via the multiplexer/demultiplexer 33. The signal light input to the incident end 1a is put into the rare-earth-doped optical fiber 31 via the optical isolator 34, and is optically amplified in the rare-earth-doped optical fiber 31. The signal light thus optically amplified is output from the emitting end 1b to the outside via the multiplexer/demultiplexer 33. The optical fiber amplifier 31 can optically amplify signal light with a broad bandwidth.

While this invention has been described in connection with what is presently considered to be the most practical and preferred embodiments, the invention is not limited to the disclosed embodiments, but on the contrary, is intended to cover various modifications and equivalent arrangements included within the scope of the appended claims.

## Claims

1. A method of producing an optical fiber preform having an erbium-doped core region, the method comprising:
a first step being such that glass consisting of SiO₂, erbium, Al₂O₃ and P₂O₅ is deposited on the inside of a silica glass pipe and sintered to form a consolidated glass layer while a burner is traversed one or more times along the silica glass pipe and the surface of the silica glass pipe is heated to a temperature of 1100 to 1200°C; and
a second step being such that while the burner is traversed one or more times along the silica glass pipe, Cl₂ gas and He gas are introduced inside the silica glass pipe and the P₂O₅-containing glass is dehydrated by heating the silica glass pipe,
wherein:
the first step and the second step are alternately repeated;
the layer thickness of the P₂O₅-containing glass deposited in the first step is 10 µm or less; and
in the second step, either:
the silica glass pipe is heated to 1300°C or more and the flow rate of the Cl₂ gas is equal to or more than 0.25 of the total gas flow rate; or
the silica glass pipe is heated to 1800°C or more and the flow rate of the Cl₂ gas is equal to or more than 1/10 of the total gas flow rate.

2. A method of producing an optical fiber preform having an erbium-doped core region, the method comprising:
a first step being such that glass consisting of SiO₂ and P₂O₅ is deposited on the inside of a silica glass pipe and sintered to form a consolidated glass layer while a burner is traversed one or more times along the silica glass pipe and the surface of the silica glass pipe is heated to a temperature of 1100 to 1200°C;
a second step being such that while the burner is traversed one or more times along the silica glass pipe, Cl₂ gas and He gas are introduced inside the silica glass pipe and the P₂O₅-containing glass is dehydrated by heating the silica glass pipe; and
a third step being such that glass containing SiO₂, erbium and Al₂O₃ but not P₂O₅ is deposited on the inside of the silica glass pipe while the burner is traversed one or more times along the silica glass pipe,
wherein:
the first, second and third steps are repeatedly performed in this order;
the layer thickness of the P₂O₅-containing glass deposited in the first step is 10 µm or less; and
in the second step, either:
the silica glass pipe is heated to 1300°C or more and the flow rate of the Cl₂ gas is equal to or more than 0.25 of the total gas flow rate; or
the silica glass pipe is heated to 1800°C or more and the flow rate of the Cl₂ gas is equal to or more than 1/10 of the total gas flow rate.

3. An erbium-doped optical fiber having an attenuation of 15 dB/km or less at a wavelength of 1200 nm, and comprising a core region and a cladding region enclosing the core region,
wherein the core region includes phosphorus of 3 wt% or more, aluminum of 0.3 wt% or more, erbium of 500 wtppm or more, and chlorine of 0.03 wt% or more, and the cladding region has a refractive index that is lower than the refractive index of the core region.

4. An erbium-doped optical fiber according to claim 3, wherein the cladding region contains fluorine.

5. An optical fiber amplifier comprising:
An erbium-doped optical fiber according to claim 3 or 4;
a pump light source; and
a multiplexer/demultiplexer,
wherein the pump light source is arranged to output pump light having a wavelength capable of exciting the erbium added to the core region of the erbium-doped optical fiber, and the multiplexer/demultiplexer is arranged to supply the pump light output from the pump light source to the erbium-doped optical fiber.

6. An optical fiber amplifier according to claim 5, wherein gain is obtained in a wavelength range including a wavelength range of 1565 nm to 1625 nm.

## Patentansprüche

1. Verfahren zur Herstellung einer optischen Faser-Vorform mit einem Erbium-dotierten Kernbereich, wobei das Verfahren umfasst:
einen ersten Schritt, der so ist, dass Glas, bestehend aus SiO₂, Erbium, Al₂O₃ und P₂O₅, auf dem Inneren einer Silika-Glasröhre abgeschieden wird und gesintert wird, um eine konsolidierte Glasschicht zu bilden, während ein Brenner einmal oder mehrmals entlang der Silika-Glasröhre geführt wird und die Oberfläche der Silika-Glasröhre auf eine Temperatur von 1.100 bis 1.200°C erwärmt wird; und
einen zweiten Schritt, der so ist, dass, während der Brenner einmal oder mehrmals entlang der Silika-Glasröhre geführt wird, Cl₂-Gas und He-Gas in das Innere der Silika-Glasröhre eingeführt werden und das P₂O₅-haltige Glas durch Erwärmen der Silika-Glasröhre dehydriert wird,
worin:
der erste Schritt und der zweite Schritt alternierend wiederholt werden;
die Schichtdicke des P₂O₅-haltigen Glases, das im ersten Schritt abgeschieden wird, 10 *µ*m oder weniger beträgt; und
in dem zweiten Schritt entweder:
die Silika-Glasröhre auf 1.300°C oder höher erwärmt wird und die Flussrate des Cl₂-Gases gleich ist oder größer ist als 0,25 der Gesamtgas-Flussrate; oder
die Silika-Glasröhre auf 1.800°C oder mehr erwärmt wird und die Flussrate des Cl₂-Gases gleich oder höher ist als 1/10 der Gesamtgas-Flussrate.

2. Verfahren zur Herstellung einer optischen Faser-Vorform mit einem Erbium-dotierten Kernbereich, wobei das Verfahren umfasst:
einen ersten Schritt, der so ist, dass Glas, das aus SiO₂ und P₂O₅ besteht, auf dem Inneren einer Silika-Glasröhre abgeschieden wird und gesintert wird, um eine konsolidierte Glasschicht zu bilden, während ein Brenner einmal oder mehrmals entlang der Silika-Glasröhre geführt wird und die Oberfläche der Silika-Glasröhre auf eine Temperatur von 1.100 bis 1.200°C erwärmt wird;
einen zweiten Schritt, der so ist, dass, während der Brenner einmal oder mehrmals entlang der Silika-Glasröhre geführt wird, Cl₂-Gas und He-Gas in das Innere der Silika-Glasröhre eingeführt werden und das P₂O₅-haltige Glas durch Erwärmen der Silika-Glasröhre dehydriert wird, und
einen dritten Schritt, der so ist, dass Glas, das SiO₂, Erbium und Al₂O₃, jedoch kein P₂O₅, enthält, auf dem Inneren der Silika-Glasröhre abgeschieden wird, während der Brenner einmal oder mehrmals entlang der Silika-Glasröhre geführt wird,
worin:
die ersten, zweiten und dritten Schritte wiederholt in dieser Reihenfolge durchgeführt werden;
die Schichtdicke des P₂O₅-haltigen Glases, das im ersten Schritt abgeschieden wird, 10 *µ*m oder weniger beträgt; und
in dem zweiten Schritt entweder:
die Silika-Glasröhre auf 1.300°C oder höher erwärmt wird und die Flussrate des Cl₂-Gases gleich ist oder größer ist als 0,25 der Gesamtgas-Flussrate; oder
die Silika-Glasröhre auf 1.800°C oder höher erwärmt wird und die Flussrate des Cl₂-Gases gleich ist oder höher ist als 1/10 der Gesamtgas-Flussrate.

3. Erbium-dotierte optische Faser mit einer Dämpfung von 15 dB/km oder weniger bei einer Wellenlänge von 1.200 nm und umfassend einen Kernbereich und einen Ummantelungsbereich, der den Kernbereich einschließt,
worin der Kernbereich Phosphor in einer Menge von 3 Gew.% oder mehr, Aluminium in einer Menge von 0,3 Gew.% oder mehr, Erbium in einer Menge von 500 Gew.-ppm oder mehr und Chlor in einer Menge von 0,03 Gew.% oder mehr umfasst und der Ummantelungsbereich einen Brechungsindex aufweist, der niedriger ist als der Brechungsindex des Kernbereichs.

4. Erbium-dotierte optischer Faser gemäß Anspruch 3, worin der Ummantelungsbereich Fluor enthält.

5. Optischer Faserverstärker, umfassend:
eine Erbium-dotierte optische Faser gemäß Anspruch 3 oder 4;
eine Pumplichtquelle; und
einen Multiplexer/Demultiplexer,
worin die Pumplichtquelle so angeordnet ist, dass sie Pumplicht mit einer Wellenlänge ausgibt, die in der Lage ist, das Erbium, das zu dem Kernbereich der Erbiumdotieren optischen Faser zugegeben ist, anzuregen, und worin der Multiplexer/Demultiplexer angeordnet ist, um das ausgegebene Pumplicht von der Pumplichtquelle zu der Erbium-dotierten optischen Faser zuzuführen.

6. Optischer Faserverstärker gemäß Anspruch 5, worin eine Verstärkung im Wellenlängenbereich erhalten wird, der einen Wellenlängenbereich von 1.565 nm bis 1.626 nm einschießt.

## Revendications

1. Procédé de production d'une préforme de fibre optique ayant une région centrale dopée à l'erbium, le procédé comprenant :
une première étape telle que du verre constitué de SiO₂, d'erbium, de Al₂O₃ et de P₂O₅ est déposé à l'intérieur d'un tuyau en verre de silice et fritté pour former une couche de verre consolidé pendant qu'un bruleur est passé une ou plusieurs fois le long du tuyau en verre de silice et la surface du tuyau en verre de slice est chauffée à une température de 1100 à 1200°C ; et
une deuxième étape telle que pendant que le bruleur est passé une ou plusieurs fois le long du tuyau en verre de silice, du gaz Cl₂ et du gaz He sont introduits à l'intérieur du tuyau en verre de silice et le verre contenant du P₂O₅ est déshydraté en chauffant le tuyau en verre de silice,
dans lequel :
la première étape et la deuxième étape sont répétées alternativement;
l'épaisseur de la couche du verre contenant du P₂O₅ déposé dans la première étape est de 10 µm ou moins; et
dans la deuxième étape, soit :
le tuyau en verre de silice est chauffé à 1300°C ou plus et le débit de gaz Cl₂ est égal ou supérieur à 0,25 du débit total de gaz ; soit
le tuyau en verre de silice est chauffé à 1800°C ou plus et le débit de gaz Cl₂ est égal ou supérieur à 1/10 du débit total de gaz.

2. Procédé de production d'une préforme de fibre optique ayant une région centrale dopée à l'erbium, le procédé comprenant :
une première étape telle que du verre constitué de SiO₂ et de P₂O₅ est déposé à l'intérieur d'un tuyau en verre de silice et fritté pour former une couche de verre consolidé pendant qu'un bruleur est passé une ou plusieurs fois le long du tuyau en verre de silice et la surface du tuyau en verre de silice est chauffée à une température de 1100 à 1200°C ;
une deuxième étape telle que pendant que le bruleur est passé une ou plusieurs fois le long du tuyau en verre de silice, le gaz Cl₂ et le gaz He sont introduits à l'intérieur du tuyau en verre de silice et le verre contenant du P₂O₅ est déshydraté en chauffant le tuyau en verre de silice ; et
une troisième étape telle que du verre contenant du SiO₂, de l'erbium et du Al₂O₃ mais pas de P₂O₅ est déposé à l'intérieur du tuyau en verre de silice pendant que le bruleur est passé une ou plusieurs fois le long du tuyau en verre de silice,
dans lequel :
les première, deuxième et troisième étapes sont mise en oeuvre de manière répétée dans cet ordre ;
l'épaisseur de couche du verre contenant du P₂O₅ déposé dans la première étape est de 10 µm ou moins; et
dans la deuxième étape, soit :
le tuyau en verre de silice est chauffé à 1300°C ou plus et le débit de gaz de Cl₂ est égal ou supérieur à 0,25 du débit total de gaz ; soit
le tuyau en verre de silice est chauffé à 1800°C ou plus et le débit de gaz de Cl₂ est égal ou supérieur à 1/10 du débit total de gaz.

3. Fibre optique dopée à l'erbium ayant une atténuation de 15 dB/km ou moins à une longueur d'onde de 1200 nm, et comprenant une région centrale de gainage entourant la région centrale,
dans laquelle la région centrale inclut 3 %m ou plus de phosphore, 0,3 %m ou plus d'aluminium, 500 ppm en poids ou plus d'erbium, et 0,03 %m ou plus de chlorine, et la région de gainage a un indice de réfraction qui est inférieur à l'indice de réfraction de la région centrale.

4. Fibre optique dopée à l'erbium selon la revendication 3, dans laquelle la région de gainage contient de la fluorine.

5. Amplificateur à fibre optique comprenant :
Une fibre optique dopée à l'erbium selon la revendication 3 ou 4;
une source lumineuse de pompage ; et
un multiplexeur/démultiplexeur
dans lequel la source lumineuse de pompage est agencée pour produire de la lumière de pompage ayant une longueur d'onde capable d'exciter l'erbium ajouté dans la région centrale de la fibre optique dopée à l'erbium, et le multiplexeur/démultiplexeur est agencé pour fournir la sortie de lumière de pompage depuis la source lumineuse de pompage à la fibre optique dopée à l'erbium.

6. Amplificateur à fibre optique selon la revendication 5, dans lequel le gain est obtenu dans une gamme de longueur d'onde incluant une gamme de longueur d'onde de 1565 nm à 1625 nm.
